# EUROPEAN PATENT SPECIFICATION

(11) **EP 1 088 430 B1**
(45) Date of publication and mention of the grant of the patent: **01.06.2005**
(21) Application number: 99927046.5
(22) Date of filing: 11.05.1999
(51) Int. Cl.: H04L 12/56

(54) **A COMMUNICATIONS NETWORK OR AN IP-NETWORK WHICH INCORPORATES A PACKET CLASSIFIER**
KOMMUNIKATIONSNETZ ODER IP-NETZ MIT EINEM PAKETKLASSIFIZIERER
RESEAU DE COMMUNICATION OU RESEAU IP COMPRENANT UN CLASSIFICATEUR DE PAQUETS

(30) Priority: 14.05.1998 SE 9801744
(43) Date of publication of application: 04.04.2001
(73) Proprietor: TELIA AB, 123 86 Farsta (SE)
(72) Inventor: BORG, Niklas, S-977 54 Luleaa (SE); FLODIN, Malin, S-977 52 Luleaa (SE)
(74) Representative: Hopfgarten, Nils
(86) International application number: PCT/SE1999/000788
(87) International publication number: WO 1999/059303

(56) References cited:
- EP-A2- 0 743 777
- WO-A2-97/41674
- US-A- 5 463 777
- US-A- 5 473 607
- US-A- 5 509 006
- US-A- 5 574 910

## Description

### Technical field.

A communications network or a IP-network which incorporates a packet classifier in a end system or a router which inspects each incoming packet based on information in the packet headers and determines how each packet should be treated.

### State of the art.

A packet classifier is a program in an end system or a router that inspects each incoming packet and based on the information in the packet headers determines how each packet should be treated. Thus, a packet classifier divides packets into different classes.

An operating system can take advantage of a packet classifier in many different ways. First, a packet classifier in an end system can decide which process to wake up to take care of the packets (e.g., start a user level protocol stack: D. R. Engler and M. F. Kaashoek: *DPF: Fast, Flexible Message Demultiplexing using Dynamic Code Generation.* Proc. of ACM SIGCOMM'96, August 1996.).

Second, a router can use a packet classifier to make the management of packet flows more efficient by marking packets. This makes them easier to process when sent to the next hop router, so-called tag or IP switching (Y. Rekhter, B. Davie, D. Katz, E. Rosen, G. Swallow and D. Farinacci: *Tag Switching Architecture - Overview.* Internet Draft, July 1997. Work in progress.and (*IP Switching: The Intelligence of Routing, the Performance* of *Switching*. Ipsilon Networks white paper, February 1996. http://www.ipsilon.com/productinfo/wp-ipswitch.html.).

Third, a packet classifier can be used in firewalls. For example, a company is not interested in any traffic to its local network with the exception of www-traffic to a specific computer, ftp traffic to another and PPP-connections to a third computer. These rules are inserted as filters in a packet classifier and the packets that match one of those criteria are the only ones that are allowed to pass the firewall.

Fourth, a packet classifier can be used in Quality of Service, QoS, solutions. Traditionally the Internet has only supported best effort service, no guarantees on delay or delay variation (jitter) has been given by the network. To offer different levels of service, packets must be classified so the scheduler can give each packet the requested service. Packet classification is done by examining a number of fields in the packet headers. Fields of interest are for example: source address, destination address, source port and destination port. These fields are compared with the filters stored in the packet classifier. With each filter is also an action stored. The action describes what to do if the incoming packet matches the filter. The appropriate action depends on the context in which the packet classifier is used.

US-A-5 574 910 discloses a method and apparatus for treatment of packets depending on information in the packet headers. A binary search tree including a large number of filters is utilized to determine how the packets should be treated.

### Technical problem.

The invention seeks to provide a efficient packet classifier which can be implemented in applications of the above-mentioned kind.

The classifier is not intended to solve one single problem but is instead designed to solve a group of problems and specially packet classification when a large amount of filters are stored.

### Disclosure of the invention.

According to an aspect of the present invention, there is provided a Packet Classifier as specified in claim 1.

### Advantageous effects of the invention.

A Packet Classifier formed in accordance with the invention has a number of advantages.
The packet classifiers data structure can scale well when additional filters are inserted, the filter specification is general enough to support classification on subnets etc. and the data structure is memory efficient. The advantages of the implemented packet classifier can be summarised as the following:
1.Scaleable data structure
2.General filter specifications
3.Low memory consumption

Embodiments of the invention will now be described, by way of example, with reference to the accompanying drawings, in which:
Fig. 1. illustrates, in schematic form, an packet classifier according to our invention and different parts of the classifier.
Fig. 2. illustrates, an IP and UDP header.
Fig. 3. illustrates, the binomial trees of the data structure.
Fig. 4. illustrates, the filter (SP=16, TOS=0) is the first filter inserted.
Fig. 5. illustrates, filters 0100 and 010x have been inserted.
Fig. 6. illustrates, the trie tree is extended with filters 01xx, 1000 and 1001.

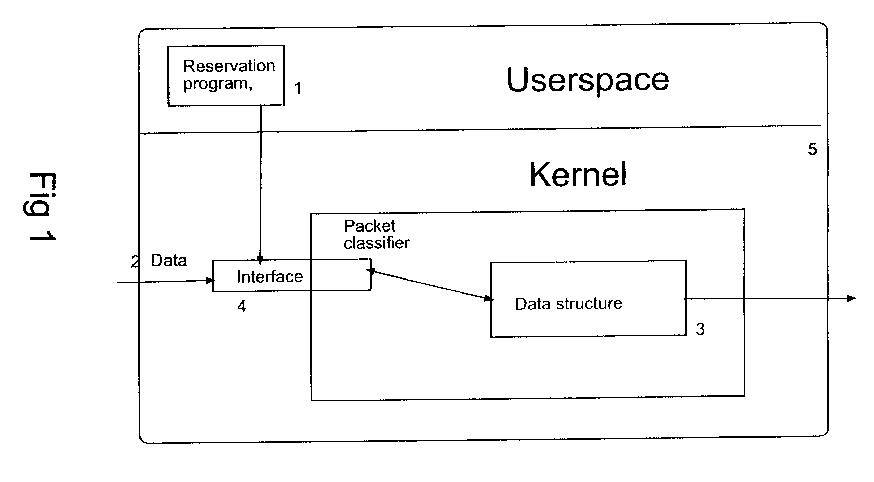

The implemented packet classifier is shown in figure 1 and consists of three more or less detached parts. These are: the reservation program 1 which is a standalone program, the interface between the packet flows 2 and the data structure 3 and the data structure itself. The main part, the data structure 3 and the interface 4 between it and the packets, is implemented as a part of the kernel 5 in the operating system NetBSD. This is done to speed up the packet classification and to achieve access to the incoming packets in a natural way. The reservation program does not have the same demands for swiftness, and interaction with the incoming packets is not needed either. Therefore it is placed in user space.

The implementation of the packet classifier is relatively general. The classifier is not optimized to solve one single problem but is instead designed to solve a group of problems, namely packet classification when a large amount of filters are stored.

### Filters

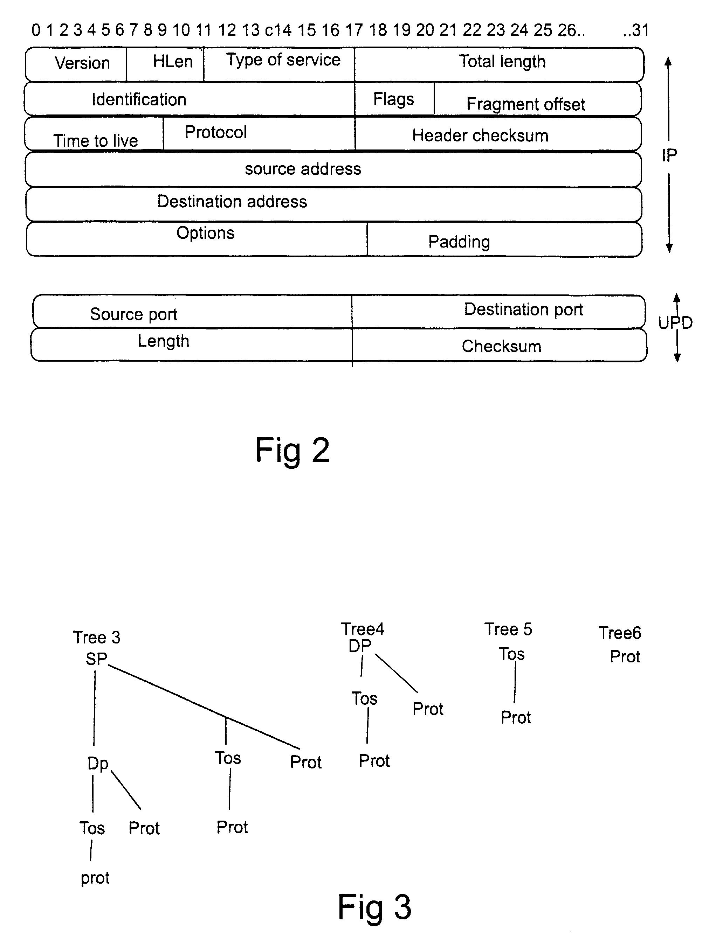

A filter consists of a reservation and a number of fields in the packet headers. A filter can consist of any combination of the six fields shown in figure 2.

The following abbreviations are introduced for these fields:

| | | |
|---|---|---|
| • SA bits | - Source Address | 32 |
| • DA bits | - Destination Address | 32 |
| • SP bits | - Source Port | 16 |
| • DP bits | - Destination Port | 16 |
| • Prot - | - Protocol | 8 bits |
| • TOS - | - Type of Service | 8 bits |

The reason for choosing these field are that they can specify a flow. Some prior art uses the SA,DA,DP and Prot fields to specify flows and filters. Differential Services uses the TOS field in some proposals in the prior art.
At start up time it is possible to give different priority orders to the fields that shall be classified on (e.g., the packet classifier can be configured to give the source address field higher priority than the protocol field). A priority order between the different fields is necessary since an incoming packet can match more then one filter. For example, a packet can match one filter which is based on the source and destination ports and at the same time match another filter which is based on the source and destination address. The priority order then decides which filter that will be chosen.

### Granularity of flows

An important quality for a fast packet classifier is that filters can match not only individual flows but also groups of flows. The property that indicates on which detail level a flow is specified is called granularity. With a coarser granularity each single flow does not have to be specified when making the same filter for many flows, thus a complete subnet can be specified with just one filter. The advantage of using a coarser granularity is that many flows can share a single filter, meaning that the filters are fewer. This results in faster packet classification. The disadvantage is a lower level of detail. One flow cannot be separated from the other. Our packet classifier supports filter specifications on subnets. Source and destination addresses can have subnet filters made on bit level. The notation 131.115.22.11/29 means that a filter is made on the high order 29 bits in the address.

### The reservation program

The reservation program is the part of the packet classifier where new filters are made and old ones are deleted. Filters consist of header fields and a corresponding reservation. Filters are inserted as the user enters the filters in a configuration file. After that the user compiles the configuration file with the reservation program. The reservation program gives, if the configuration file is syntactically correct, a compiled file back. This file is then copied by the user, via a device, down to kernel. Addition and removal of filters can be done at any time. No rebooting is necessary and the new filters are accessible for the classifier as soon as they are copied down to the kernel.

### The interface between the incoming packets and the data structure

The interface forwards incoming packets to the data structure. It also takes care of the interrupts that are generated when new filters are copied down to the kernel. When these filters arrive it is the interface that takes care of them and inserts them into, or removes them from, the data structure.

### The data structure

The filters and their reservations are stored in the data structure. This is the most important part of a fast packet classifier, at least when many filters are stored. The reason for this is that the cost for filter lookups in a linear structure (an array or a linked list) is proportional to the numbers of filters. This is not a problem if the packet classifier only needs to store a small number of filters at the same time. Since the number of filters is small, the lookup time will also be small. For a packet classifier intended to be used in a router handling QoS matters, the working conditions are totally different. The number of simultaneously stored filters can often be counted in 1000:s and then it is not appropriate to use a linear data structure. In this case it is important to find matching filters without having to traverse all of them. The faster we can find a match between the incoming packet and a filter the better. We have chosen to build our structure as a combination between binomial trees and tries. We have created a data structure with six binomial trees where each node in the binomial tree is a trie.

### Binomial structure

How a filter is inserted in the data structure depends on the priority order between the different fields. If we assume that SA has the highest priority followed by DA, SP, DP, TOS and PROT, our data structure consists of six binomial trees structured as in figure 3. There are six trees where the first and the second tree follow the same binomial structure as the ones below. Please observe that only the four smallest trees are pictured in figure 3.

The first tree contains all filters associated with the highest priority field (i.e., if a filter includes the highest priority field, all fields of the filter will be inserted in the first tree). If the filter does not include this field but the second highest, all fields of the filter are inserted in the second tree etc. If DP had been given a higher priority than SP at the configuration, DP would be found in SP's position in figure 3 and vice versa.
These binomial trees are a bit more complex than ordinary binomial trees. In figure 3 the nodes represent smaller trees. These smaller trees are trie trees and will be described further down. When inserting a filter in this structure, we first insert the highest priority field in the trie tree at the top of the corresponding binomial tree. All nodes in a trie tree has pointers to its following binomial trees. When the high priority field has been inserted, the rest of the fields are inserted recursively in the following binomial trees pointed at by this newly inserted node. Accordingly, each node in a binomial tree points to multiple, smaller binomial trees. The resource reservation is stored in the node containing the last inserted field.

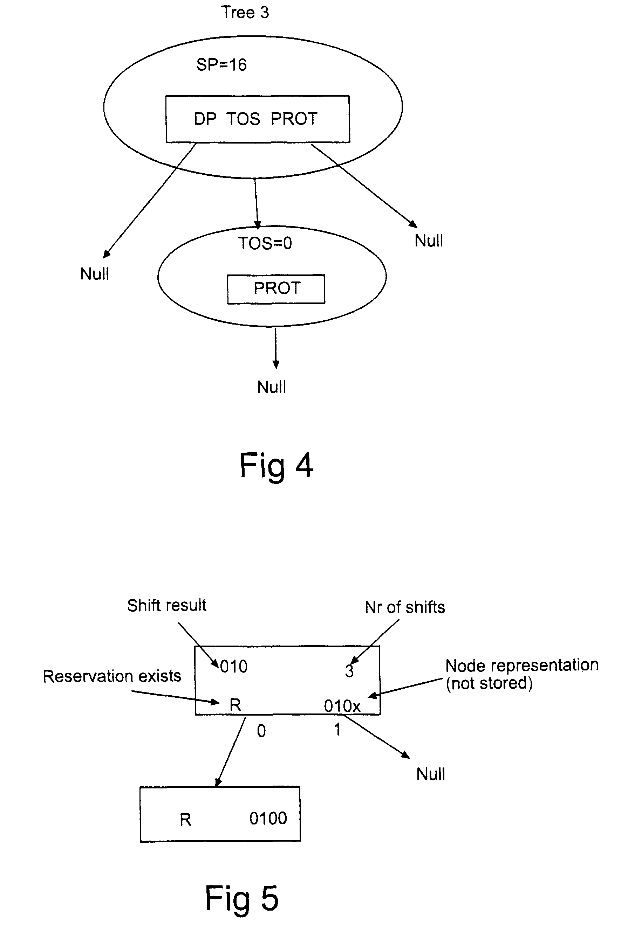

Figure 4 illustrates the third tree after inserting the filter (SP=16, TOS=0). The node in the trie tree contains pointers to the following binomial trees. In this example the same priority order as mentioned above (SA, DA, SP, DP, TOS, PROT) is assumed.

If the packet classifier is used in a router, the router must classify every incoming packet to find out if there are any specific resources allocated for it. This is done by searching the filters to find one that matches the incoming packet. The search starts in the first binomial tree. If a matching filter is found in this tree, the associated action is performed, otherwise the search continues in the second tree etc. If no filter is found in any of the six trees, then a default action is performed.

### Trie tree structure

The small trees appearing as nodes in figure 3 are trie trees. The nodes in these small trees are grouped in such a way that when a lookup is performed and a node that does not match the incoming packet is found, the lookup does not have to continue further down in this tree.
Every node in the tree contains the number of bits of the field in the incoming packet that has to be compared and also what these bits should be to get a match. When there is a match, the field of the incoming packet is shifted this given number of bits and the next bit of the incoming packet decides which one of the two children nodes to visit next. This bit is shifted, and a new comparison is made in the corresponding child node.
Since the best matching filter is the longest match, the search must continue with the ambition to find a longer match even if a reservation already has been found. A match is better than a previous match if it contains a longer address prefix or if it comprises more fields. However, not only the number of fields in the filter decides if it is a better match, but also the priority order. If we have the same priority order as mentioned before (SA, DA, SP, DP, TOS, PROT), the filter (SP, DP) would give a better match than (SP, TOS, PROT) although it comprises fewer fields, on account of the fact that DP has higher priority than both TOS and PROT. This assumes of course that both these filters match the incoming packet. Accordingly, when we find a matching filter in a node, the search continues either further down the trie tree or, if that is not possible, in the following binomial trees starting at that particular node.

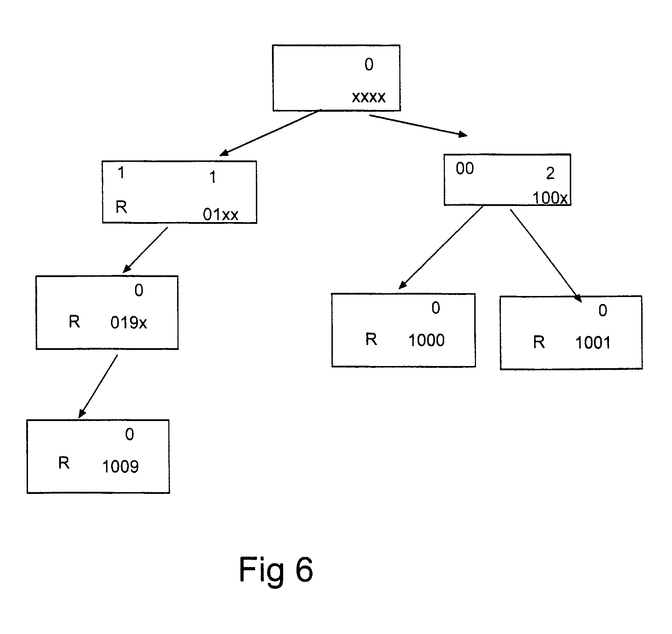

In figure 5 and figure 6 we illustrate how insertion of filters in these trie trees works. We exemplify using fields of maximum four bits where insertion of prefixes is possible.
Figure 5 illustrates the insertion of the fields 0100 and 010x, where x denotes that this bit is not included in the filter. In each node the number of shifts to perform, the shift result and if a reservation exists for this node is stored.
Figure 6 illustrates the insertion of 0100 and 010x as in the previous example, but also 01xx, 1000 and 10++01.

### Memory enhancements

Each filter that is kept in our data structure is stored as a number of cells. Because of the structure of our algorithm these cells are rather many, approximately ten, per filter. They are also rather small. These cells are smaller then the smallest size of memory the kernel of NetBSD can allocate, which means that we are wasting memory every time we make a filter. To cope with this and to save time when inserting new filters a new memory allocation structure has been implemented. This new structure merges a number of small cells into larger cells which are allocated when needed. It also removes larger cells when no smaller cell in it is being used.

In the prior art section some fields of application for packet classifiers were enumerated. Our invention have the greatest advantages for mainly two of these; packet classifiers used in firewalls and packet classifiers used in a QoS context. What these two fields of application have in common is foremost that the number of stored filters are often large and classification needs to be done fast. This means that the packet classifier used in these areas need to scale well regarding time when many filters are inserted. This is what our invention is intended for.

### Our packet classifier in firewalls

A classifier is a natural and indispensable part of a firewall. Greater demands are raised on the firewalls as they become more advanced and protect larger areas. The performance must stay the same despite that more filters are stored. Newly performed tests have show that performance is one of the weakest points of today's firewalls. In the test, virtual clients instead of real clients were used. When the number of virtual clients grows beyond 48, the performance rapidly drops for many of the tested firewalls. A large share of this increase in lookup time is likely to depend on increased costs of packet classification. To meet these new demands, our packet classifier tries to improve the scaling properties regarding the lookup time of the packet classifiers data structure.
Our packet classifier already works as a packet filter. If our packet classifier should work as a circuit level gateway, extensions like session memory also needs to be implemented. A number of filters and their according actions must also be implemented to make the firewall know what to do with the packets after the classification. The most common actions are 'accept', 'deny' and 'deny and report'. An accept-filter lets all matching packets through. A deny-filter denies all matching packets and a deny-and-report filter denies matching packets and reports them too. A module to take care of the reaction on these filters must also be implemented, but this is a question of minor adjustments to the present code.

### Our packet classifier in a QoS context

No matter which model of QoS that is introduced in the network, packet classifiers will be needed. These packet classifiers will often work with large amounts of flows and large amounts of reservations. To deal with this in a swift way, new packet classifiers with better performance must be developed. It is in this perspective our packet classifier is interesting.
In a QoS enabled network, packets must be compared to stored reservations to find out which class of service a packet shall be given. If this is done in every involved node as in RSVP, or if it is done at the border routers of the networks like in many DiffServ proposals, does not matter for the packet classifier. The same fields in the packet header will be of interest and the number of filters will in both cases be large.
Another application for our packet classifier in a QoS context is as a policing unit. A policing unit, as has been mentioned before, discriminates flows that send to much data. This can be realized with a packet classifier and new modules that remembers how much data each flow has sent.
The policing unit compares all incoming packets against the stored filters. If a packet matches a filter and the according reservation the flow is examined to see if it keeps to what is agreed or if it sends more. If more packets than agreed on are sent, packets are either degraded to best effort or simply dropped. In this case as well, it is demanded of the packet classifier to be able to compare incoming packets fast to a large amount of filters.

The invention is to be limited only by the scope of the claim so the description is not to be taken as limiting the invention.

## Claims

1. A communications network or an IP-network which incorporates a packet classifier in an end system or a router, which is arranged to inspect each incoming packet in a search tree with a number of nodes based on information in fields in the packet headers and to determines how each packet should be treated, said packet classifier being arranged to divides packets into classes, when a large number of filters are stored, by matching each incoming packet to one of said large number of filters, **characterised in that** the packet classifier comprises a data structure (3) built as a combination between binomial trees and trie trees, where each node in a binomial tree is a trie tree, in which the filters are stored, for improving the performance of the data structure (3), **in that** a field prefix is stored in every node in the trie trees, and **in that** the packet classifier is arranged to compare the field prefix with a corresponding bit field of the incoming packet.

2. A communications network or an IP-network as claimed in claim 1, **characterized in that** every node in the trie tree further includes stored data about the number of shift steps to be done in a bit field of the packet, the result of the shift, and if a reservation exists for the node.

3. A communications network or an IP-network as claimed in claim 2, **characterized in that** the packet classifier is implemented in the kernel (5) of an operating system.

4. A communications network or an IP-network as claimed in claim 1, **characterized in that** the packet classifier is a part of a firewall of the network.

5. A communications network or an IP-network as claimed in claim 1, **characterized in that** the network is a QoS enabled network.

6. A communications network or an IP-network as claimed in any of the previous claims, **characterized in that** the packet classifier consists of three detached parts which are: the reservation program (1) which is a standalone program, an interface (4) between the packet flows (2) and the data structure (3), and the data structure (3) itself, and where the main part, the data structure (3) and the interface (4), is implemented as a part of the kernel (5) in the operating system NetBSD.

7. A communications network or an IP-network as claimed in any of the previous claims, **characterized in that** nodes which have underlying child nodes may have stored reservations for subnets.

8. A method in a communications network to manage packets in a packet classifier, situated in an end system or a router, that examines every incoming packet in a search tree with a plurality of nodes and that, based on information in fields in the packet headers, decides how every packet shall be treated, **characterized by** the steps:
• Providing said packet classifier with a data structure (3) built as a combination between binomial trees and trie trees, where each node in a binomial tree is a trie tree;
• Storing filters in said data structure (3);
• Comparing a bit field of an incoming packet with a field prefix stored in a node in a trie tree;
• If the field prefix does not match the bit field of the incoming packet, finish the search in that trie tree;
• If the field prefix does match the bit field of the incoming packet, shift the bit field of the incoming packet the number of steps given in the node that is visited;
• With the next bit in the bit field decide which child node to be visited in the next place.

## Patentansprüche

1. Kommunikationsnetz oder IP-Netz, das in einem Endsystem oder einem Router einen Paket-Classifier beinhaltet, der eingerichtet ist, um jedes eingehende Paket in einem Suchbaum mit einer Anzahl Knoten auf Grundlage von Informationen in Feldern in den Paketköpfen zu überprüfen und zu entscheiden, wie jedes Paket behandelt werden soll, wobei der Paket-Classifier eingerichtet ist, um Pakete, wenn eine große Zahl Filter gespeichert ist, durch Abgleichen jedes eingehenden Pakets mit einem aus der großen Zahl von Filtern in Klassen aufzuteilen, **dadurch gekennzeichnet, dass** der Paket-Classifier eine Datenstruktur (3) beinhaltet, die als eine Kombination aus binomialen Bäumen und Trie-Bäumen erstellt ist, wobei jeder Knoten in einem binomialen Baum ein Trie-Baum ist, in der die Filter zwecks Verbesserung der Leistung der Datenstruktur (3) gespeichert sind, dass ein Feld-Präfix in jedem Knoten in den Trie Bäumen gespeichert ist und dass der Paket-Classifier eingerichtet ist, um das Feld-Präfix mit einem entsprechenden Bitfeld des eingehenden Pakets zu vergleichen.

2. Kommunikationsnetz oder IP-Netz gemäß Anspruch 1, **dadurch gekennzeichnet, dass** jeder Knoten in dem Trie-Baum außerdem gespeicherte Daten über die Zahl der Shift-Schritte, die in einem Bitfeld des Pakets auszuführen sind, über das Ergebnis des Shifts und darüber enthält, ob eine Reservierung für den Knoten vorliegt.

3. Kommunikationsnetz oder IP-Netz gemäß Anspruch 2, **dadurch gekennzeichnet, dass** der Paket-Classifier in dem Kernel (5) eines Betriebssystems implementiert ist.

4. Kommunikationsnetz oder IP-Netz gemäß Anspruch 1, **dadurch gekennzeichnet, dass** der Paket Classifier ein Teil einer Firewall des Netzes ist.

5. Kommunikationsnetz oder IP-Netz gemäß Anspruch 1, **dadurch gekennzeichnet, dass** das Netz ein QoS Enabled Netz ist.

6. Kommunikationsnetz oder IP-Netz gemäß jedem der vorangehenden Ansprüche, **dadurch gekennzeichnet, dass** der Paket Classifier aus drei separaten Teilen besteht, die sind: das Reservierungsprogramm (1), das ein eigenständiges Programm ist, eine Schnittstelle (4), zwischen den Paketströmen (2) und der Datenstruktur (3), und die Datenstruktur (3) selbst, und wo der Hauptteil, die Datenstruktur (3) und die Schnittstelle (4), als ein Teil des Kernels (5) in das Betriebssystem NetBSD implementiert ist.

7. Kommunikationsnetz oder IP-Netz gemäß jedem der vorangehenden Ansprüche, **dadurch gekennzeichnet, dass** Knoten, die darunter liegende Kindknoten haben, Reservierungen für Teilnetze gespeichert haben können.

8. Verfahren in einem Kommunikationsnetz zum Verwalten von Paketen in einem Paket-Classifier, der in einem Endsystem oder einem Router angeordnet ist, das jedes eingehende Paket in einem Suchbaum mit einer Vielzahl von Knoten untersucht und auf Grundlage von Information in Feldern in den Paketköpfen entscheidet, wie jedes Paket behandelt werden soll, **gekennzeichnet durch** die Schritte:
• Ausstatten des Paket-Classifiers mit einer Datenstruktur (3), die als eine Kombination aus binomialen Bäumen und Trie-Bäumen erstellt ist, wobei jeder Knoten in einem binomialen Baum ein Trie-Baum ist;
• Speichern von Filtern in der Datenstruktur (3);
• Vergleichen eines Bitfeldes eines eingehenden Pakets mit einem Feld-Präfix, das in einem Knoten in einem Trie-Baum gespeichert ist;
• Beenden der Suche in diesem Trie-Baum, falls das Feld-Präfix nicht mit dem Bitfeld des eingehenden Pakets zusammenpasst;
• Verschieben des Bitfelds des eingehenden Pakets um die Anzahl von Schritten, die in dem Knoten, der besucht wird, angegeben ist, falls das Feld-Präfix mit dem Bitfeld des eingehenden Pakets zusammenpasst;
• Mit dem nächsten Bit in dem Bitfeld entscheiden, welcher Kindknoten als nächster besucht wird.

## Revendications

1. Réseau de communications ou réseau IP qui comprend un classificateur de paquets dans un système d'extrémité ou un routeur, qui est agencé pour inspecter chaque paquet entrant dans un arbre de recherche avec un nombre de noeuds sur la base d'informations contenues dans des champs des en-têtes de paquet et pour déterminer la façon dont chaque paquet doit être traité, le dit classificateur de paquets étant agencé pour diviser les paquets en classes, lorsqu'un grand nombre de filtres sont stockés, par mise en correspondance de chaque paquet entrant avec un du dit grand nombre de filtres, **caractérisé en ce que** le classificateur de paquets comprend une structure de données (3) construite comme une combinaison entre des arbres binomiaux et des arbres de trie (en anglais : « trie tree »), où chaque noeud d'un arbre binomial est un arbre de trie, dans lequel les filtres sont stockés, pour améliorer le fonctionnement de la structure de données (3), **en ce qu'**un préfixe de champ est stocké dans chaque noeud des arbres de trie, et **en ce que** le classificateur de paquets est agencé pour comparer le préfixe de champ à un champ binaire correspondant du paquet entrant.

2. Réseau de communications ou réseau IP selon la revendication 1, **caractérisé en ce que** chaque noeud de l'arbre de trie comprend en outre des données stockées concernant le nombre de pas de décalage à effectuer dans un champ binaire du paquet, le résultat du décalage, et si une réservation existe pour le noeud.

3. Réseau de communications ou réseau IP selon la revendication 2, **caractérisé en ce que** le classificateur de paquets est mis en oeuvre dans le noyau (5) d'un système d'exploitation.

4. Réseau de communications ou réseau IP selon la revendication 1, **caractérisé en ce que** le classificateur de paquets est une partie d'un coupe-feu du réseau.

5. Réseau de communications ou réseau IP selon la revendication 1, **caractérisé en ce que** le réseau est un réseau ayant une activité de qualité de service QoS.

6. Réseau de communications ou réseau IP selon une quelconque des revendications précédentes, **caractérisé en ce que** le classificateur de paquets consiste en trois parties détachées qui sont : le programme de réservation (1) qui est un programme autonome, une interface (4) entre les circulations de paquets (2) et la structure de données (3), et la structure de données (3) elle-même, et dans lequel la partie principale, qui est la structure de données (3) et l'interface (4), est mise en oeuvre comme une partie du noyau (5) dans le système d'exploitation NetBSD.

7. Réseau de communications ou réseau IP selon une quelconque des revendications précédentes, **caractérisé en ce que** les noeuds qui ont des noeuds enfants sous-jacents peuvent avoir des réservations stockées pour des sous-réseaux.

8. Procédé dans un réseau de communications pour gérer les paquets dans un classificateur de paquets, situé dans un système d'extrémité ou un routeur, qui examine chaque paquet entrant dans un arbre de recherche avec une pluralité de noeuds, et qui fixe, sur la base d'informations contenues dans des champs des en-tètes de paquet, la façon dont chaque paquet sera traité,
**caractérisé par** les étapes de :
réalisation du dit classificateur de paquets avec une structure de données (3) construite comme une combinaison entre des arbres binomiaux et des arbres de trie, où chaque noeud d'un arbre binomial est un arbre de trie ;
stockage de filtres dans la dite structure de données (3) ;
comparaison d'un champ binaire d'un paquet entrant avec un préfixe de champ stocké dans un noeud d'un arbre de trie ;
si le préfixe de champ ne concorde pas avec le champ binaire du paquet entrant, fin de la recherche dans cet arbre de trie ;
si le préfixe de champ concorde avec le champ binaire du paquet entrant, décalage du champ binaire du paquet entrant du nombre de pas indiqué dans le noeud qui est visité ;
avec le bit suivant dans le champ binaire, décision sur le noeud enfant à visiter à l'endroit suivant.
